# EUROPEAN PATENT APPLICATION

(11) **EP 3 016 001 A1**
(43) Date of publication of application: **04.05.2016**
(21) Application number: 14462007.7
(22) Date of filing: 30.10.2014
(51) Int. Cl.: G06F 17/30, G06K 9/62, G06N 99/00

(54) **Data mining method and apparatus, and computer program product for carrying out the method**

(71) Applicant: Szegedi Tudományegyetem, 6720 Szeged (HU); Budapesti Muszaki és Gazdaságtudományi Egyetem, 1111 Budapest (HU)
(72) Inventor: Ekler, Péter, H-2094 Nagykovácsi (HU); Charaf, Hassan, H-1118 Budapest (HU); Forstner, Bertalan, H-1043 Budapest (HU); Lengyel, László, H-2051 Biatorbágy (HU); Béládi, Róbert, H-5630 Békés (HU); Biliczki, Vilmos, H-6725 Szeged (HU); Gyimóthy, Tibor, H-6726 Szeged (HU); Iványi, Szilárd, H-6456 Madaras (HU); Szücs, Vilmos, H-6725 Szeged (HU); Végh, Ádám, H-6725 Szeged (HU); Rak, Zoltán, H-6724 Szeged (HU); Jelasity, Márk, H-6726 Szeged (HU)
(74) Representative: Harangozo, Gabor

(57) **Abstract**

A distributed data mining method to be carried out in user equipments (110A,110B) connected to a peer-to-peer communication network (120) is disclosed, wherein each of said user equipments has a common programming platform. The method comprises the steps of:
a) in the user equipments (110A, 11 B), providing and storing a data mining frame application (130) in the form of a code running on a device-specific platform, and a trainable data mining algorithm (132) produced on a programming language common to all user equipments,
b) in a first user equipment (110A), running the data mining algorithm (132) to process user data temporarily or permanently stored in the first user equipment,
c) based on the result of the data mining processing, modifying the data structures and/or the input parameter set of the data mining algorithm (132) of the first user equipment (110A) through training,
d) at least a part of the modified input parameter set and/or the modified data structures of the data mining algorithm (132) of the first user equipment (110A) is forwarded as a training information from the first user equipment (110A) by means of peer-to-peer propagation to at least one second user equipment (110B) connected to the communication network (120), and
e) in at least one second user equipment (110B), modifying the input parameter set and/or the data structures of the data mining algorithm (132) running on the respective second user equipment (110B) by using the training information received from the first user equipment (110A).

## Description

### Field of the invention

The invention relates to data mining carried out on user data stored on user equipments connected to a distributed communication network. In particular, the present invention relates to data mining performed on so called smart devices that in addition to a device-specific programming environment, also support a kind of common application-level programming platform.

### Background art

Nowadays, wired and wireless communication systems (e.g. internet, intranets, local networks, mobile phone networks, ad hoc wireless networks, sensor networks, etc.) have been widely spread. These communication systems altogether include an extremely high number of user equipments on which various types of user data and information are stored in a distributed fashion, either temporarily or permanently. From these user data a lot of pieces of valuable information relating to the specific users or to specific groups of users can be obtained through analysis and processing, even with involving the users themselves in the analyzing process (crowdsourcing). For the analysis of user data in a distributed system, it has been a typical solution to read in or to upload the data into a central computer (or recently, into the internet "cloud"), and then to process them by special data mining applications, followed by an evaluation and a subsequent use of the thus obtained data and information, in particular for business purposes.

Beyond the fact that this kind of data collection for data mining requires a substantial throughput of the communication networks, neither it is an ideal solution concerning data security since in a user privacy aspect, sensible (e.g. confidential or secret) data or information are often processed in a remote central site while the proper protection of these data does not always receives enough attention during data transmission or central processing.

Another issue is that in certain cases the information can be evaluated only by utilizing a user's knowledge, such as in a case where a user processes photos taken by itself without any GPS information and hence, only the user himself or herself knows where the photos have been taken.

One of the possible solutions of the above problem may be the use of distributed data mining systems, in which data analysis and processing are performed directly within the user equipments without that any user data, in particular sensible, data would leave the equipment. A benefit of carrying out data mining directly in the user equipments is that it becomes possible to directly involve a user in the data processing (ccowdsourcing), in which, for example, the user may label its own data as learning data, may evaluate the learning process and so on.

The aforementioned distributed data mining is particularly suitable for using in distributed peer-to-peer (P2P) communication systems, in which information obtained by analyzing the user data may be propagated by its sharing among the user equipments. In this way, any other application of the network-connected user equipments utilizing such user data may provide a more and more precise estimation of certain parameters by using the information being continuously obtained from other user equipments serving as data sources. In the field of distributed data mining in peer-to-peer networks, a number of papers have been published, including Datta et al., Distributed Data Mining in Peer-to-Peer Networks (Journal IEEE Internet, Vol. 10, Issue 4, pp. 18-26, July 2006).

The efficiency of data mining is, however, limited even in such P2P systems if the data mining algorithms operating in the user equipments are permanent and do not have respect to the individual character of the user data stored in a given user equipment, said individual character resulted from the particular type of the equipment (e.g. phone, TV set, sensor, etc.), the personality of the user or the new knowledge obtained through learning.

The object of the present invention is to eliminate at least one of the above mentioned problems of the prior art data mining solutions.

The invention is based on the following inventive idea. If a data mining algorithm (or more exactly, its logic or parameters) is appropriately modified on the basis of the information obtained in the data mining process, that is the data mining algorithm itself is subject to training, polymorphic data mining algorithms may be generated for a plurality of user equipments so that the various instances of the data mining algorithms can efficiently adapt themselves to those equipments in which they are running or to those data types (photos, video files, audio files, sensor data, business information, operational parameters, etc.), on which the data mining is being carried out. It has been also recognized that the efficiency of data mining may be further enhanced by integrating the knowledge obtained through training into the algorithms of each of the user equipments.

An essential condition of the above mentioned operation is, however, that the data mining algorithms are to be produced in a programming language that can be compiled by each of the user equipments used for distributed data mining, meaning that those equipments should have a common programming platform. In the currently wide-spread network devices that are suitable for using with data mining, in particular the so called smart devices, such a common programming platform is the JavaScript, but in the future any other platform may also be available for this purpose.

### Summary of the invention

In a first aspect of the invention, there is provided a distributed data mining method to be carried out in user equipments connected to a peer-to-peer communication network, each of said user equipments having a common programming platform, the method comprising the steps of:
a) in the user equipments, providing and storing a data mining frame application in the form of a code running on a device-specific platform, and a trainable data mining algorithm produced on a programming language common to all user equipments,
b) in a first user equipment, running the data mining algorithm to process user data temporarily or permanently stored in the first user equipment,
c) based on the result of the data mining processing, modifying the data structures and/or the input parameter set of the data mining algorithm of the first user equipment through training,
d) at least a part of the modified input parameter set and/or the modified data structures of the data mining algorithm of the first user equipment is forwarded as a training information from the first user equipment by means of peer-to-peer propagation to at least one second user equipment connected to the communication network, and
e) in at least one second user equipment, modifying the input parameter set and/or the data structures of the data mining algorithm running on the respective second user equipment by using the training information received from the first user equipment.

In a second aspect of the invention, there is provided a user equipment for using in the above method, wherein the user equipment is a processor-based device including a data mining frame application in the form of a code running on a device-specific platform, and a trainable data mining algorithm produced in JavaScript programming language and embedded in the frame application, and wherein the user equipment is adapted to communicate with other user equipments of the same type through a peer-to-peer communication network.

In a third aspect of the invention, there is provided a computer program product stored on a computer-readable medium and comprising instructions that when executed in a processor-based user equipment described above, which is connected to a peer-to-peer communication network, carries out the steps of:
- applying a data mining algorithm to process user data temporarily or permanently stored in the user equipment,
- based on the result of the data mining processing, modifying the data structures and/or the input parameter sets of the data mining algorithm through training, and
- forwarding at least a part of the modified input parameter set and/or the modified data structures of the data mining algorithm as training information to another user equipment of the same type through the peer-to-peer communication network.

In a fourth aspect of the invention, there is provided a computer program product stored on a computer-readable medium and comprising instructions that when executed in a processor-based user equipment described above, which is connected to a peer-to-peer communication network, carries out the steps of:
- from another user equipment of the same type, receiving training information relating to the training of the data mining algorithm of the associated user equipment through the peer-to-peer communication network; and
- based on the training information, modifying the input parameter set and/or the data structures of the data mining algorithm of the associated user equipment.

The method, the user equipment and the computer program products according to the present invention thus provide an efficient data mining solution, wherein in a distributed P2P communication network, data mining is moved directly to the data residing in the user equipments due to the use of a common programming platform, such as JavaScript, available in each of the peer user equipments.

In a preferred embodiment of the method according to the invention, the user is also involved in the data processing of the data mining (crowdsourcing).

Another advantage of the solution according to the invention is that it is highly scalable and also allows an efficient training of the data mining algorithms even without a substantial external intervention, wherein training may be carried out by several hundreds or even more end users.

The invention will now be described in detail with reference to the drawings, in which:
- Figure 1 is a schematic block diagram illustrating the general principle of operation of the solution according to the invention, and
- Figure 2 is a flow diagram illustrating the major steps of the method according to the present invention.

### Detailed description of the invention

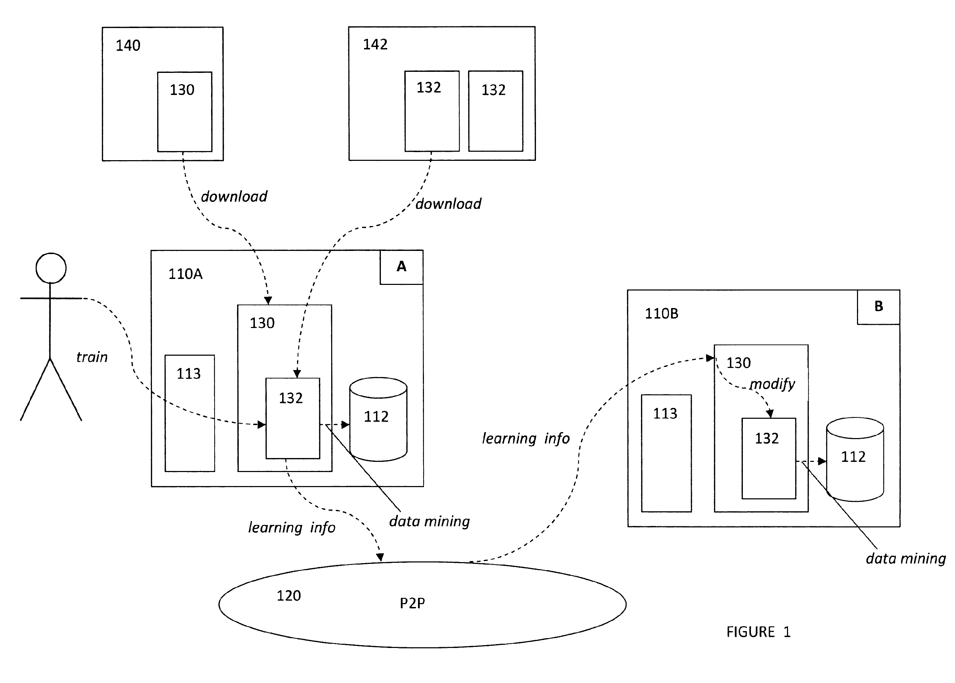

Figure 1 illustrates the principle of operation of the solution of the invention in the most general case. In a distributed data mining system 100 shown in Figure 1, at least two but preferably a large number (e.g. several thousands or several tens of thousands) of user equipments, generally referred to by the reference number 110, are connected to each other in a distributed peer-to-peer (P2P) communication network 120.

Within the context of the present invention, only those user equipments of the communication network 120 are of interest that store user data suitable for data mining or taking part in training the data mining algorithms. The user data may be stored in the user equipments 110 either temporarily (e.g. in RAM) or permanently (e.g. on electronic, magnetic, optical, etc. medium). The user equipments 110 of the present invention serve as data sources or training information sources for the data mining. The user equipments 110 are typically smart devices, such as smart phones, tablets, smart TV-s, etc. that are capable of directly or indirectly interacting with their users or to detect, sense or measure events or environmental features.

Within the context of the present invention, the communication network 120 may be any sort of homogenous or heterogeneous distributed communication network with the only restriction that a network as a whole should be adapted for peer-to-peer data communication between the user equipments 110 connected to the network or adapted for directly establishing any other kind of distributed communication scheme independently of the primary function of the user equipments 110.

The user equipments 110 have one or more data storing devices 112 (for the sake of simplicity, a single data storing device 112 is shown in Figure 1 for each user equipment 110), which in addition to other data, also store user data for data mining purposes. The user equipments 110 are also provided with user interaction means 113 through which the user of an equipment 110 may be involved in training of the data mining algorithm.

To carry out data mining, each of the user equipments 110 comprises a device-specific data mining frame application 130 into which one or more universal data mining algorithms 132 may be embedded to perform data mining analysis and evaluation of the data stored in the data storing device 112. By using the user interaction means 113, a user's knowledge may also be recorded, for example through labeling data elements, evaluating learning results by the user etc. The frame application 130 functions to run and maintain the data mining algorithm(s) 132, to manage their training by a user, and to perform communications required for the distributed data mining.

The frame application 130 may be downloaded into the user equipments 110 from a first network device 140 (e.g. server, application store). The first network device 140 may, for example, be a web shop or another source. The data mining algorithms 132 may be downloaded into the user equipments 110 from a second network device 142, for example in a way that the user equipments 110 check the algorithms stored in the second network device 142 at a predetermined interval and upon detecting a new algorithm, they download it automatically (or upon approval of the user). Alternatively, when an evaluation relating to a training process is produced in the second network device+ 142, a group of the user equipments 110 is notified, for example, by means of the *push* method and after receiving the notification, the user equipments 110 automatically download the modified data mining algorithm from the second network device 142. The second network device 142 may, for example, be a special server intended for this purpose, or another user equipment 110 connected to the communication network 120. According to the present invention, the first network device 140 and the second network device 142 are different network components only from a functional point of view, and in practice these network devices may be remote devices in geographical terms, but it is also possible that the aforementioned two functions are integrated into one network device (e.g. a server).

Preferably, the frame application 130 is developed on a platform corresponding to the operating system of the specific user equipment 110, thus the various user equipments 110 may utilize different frame applications 130. However, the data mining algorithm 132 is developed on a programming platform that is common to all of the user equipments 110. Such a programming platform may, for example, be the JavaScript. When the data mining algorithm 132 is produced in JavaScript language, for example, the frame application 130 of the various user equipments 110 can run the data mining algorithm 132 in a standard web view (or similar) web container, for example.

(Web view applications for various operating systems are available, for example, at the following links:
http://developer.android.com/reference/android/webkit/WebView.html
http://msdn.microsoft.com/library/windows/apps/xami/
windows.ui.xaml.controls.webview.aspx,
https://developer.apple.com/library/ios/documentation/uikit/reference/ UIWebView_Class/Reference/Reference.html)

Due to the fact that the embedded data mining algorithm 132 is independent of the frame application 130, the replacement of the data mining algorithm 132 or the modification thereof by means of training may be done even without a continuous involvement of the user. In case of modification by training, the original data mining algorithms (accessible on the second network device 142) tend to have an increasing number of versions (and providing more and more precise output at the same time) as a result of their use and training in the user equipments 110. This polymorphism of the data mining algorithms used in the present invention is one of the key features of the invention, as the replacement of the native applications in such platforms would otherwise be generally difficult because of safety considerations. On the contrary, by means of the polymorphic algorithms the frequent replacement of the native applications can be avoided as the data mining algorithms that become more and more unique due to learning, increasingly adapt themselves to the application environment, to the user-specific type and content of the user data and information appearing in the user equipments, as well as to the specific data sets to be learnt. As a global result, with particular regard to that the algorithms, which are changing at learning, can share the increasingly finer parameter sets and data structures efficiently among each other, the data mining process performed on each of the user equipments produces more and more precise filter results or may offer the knowledge of a respective user of an equipment or a collective knowledge or any other services beyond them (e.g. recognition of shapes, in particular types, species, etc.) for all the other users.

The data mining algorithms 132 may also be produced in Java programming environment, but in this case, the Java code of the algorithm is to be compiled into a JavaScript code, and it can be uploaded to the second network device 142 only after compilation. Although the JavaScript language was mentioned above as a preferred and commonly applicable programming platform of the data mining method 132, it is obvious for those skilled in the art that the data mining algorithm 132 may be produced also on any other platform, provided that it forms a common platform for at least a group of the user equipments 110. Of course the applicability of such data mining algorithms is limited to that group of the user equipments 110.

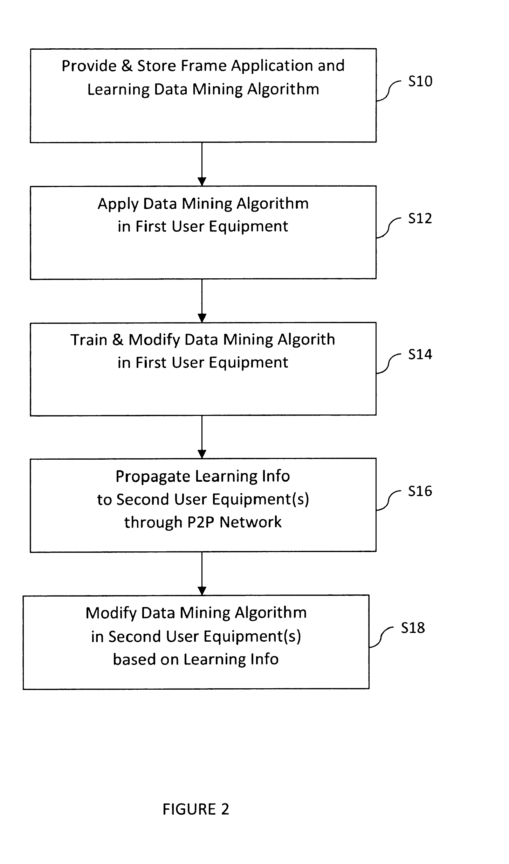

In the following, the major steps of the data mining method according to the invention will be described in detail with reference to Figures 1 and 2.

In the course of the method, an adaptive data mining is carried out in the user equipments connected to a peer-to-peer communication network 120, wherein from the point of view of the method, the user equipments are regarded as data sources. The user equipments 110 have at least one programming platform that is supported by each of the user equipments. This common programming platform may, for example, be the JavaScript, in which case the user equipments 110 have an appropriate web container (e.g. WebView) that is capable of executing the Java code.

In the first step S10 of the method, a device-specific data mining frame application 130 and a universal, trainable data mining algorithm 132 represented by a code running on a common programming platform are provided and stored in the user equipments 110.

In the next step S12, the data mining algorithm 132 is applied in a first user equipment 110A (the user equipment 110 with the mark 'A' in Figure 1) to process user data permanently or temporarily stored in the first user equipment 110A.

By using the data processing results of the data mining, data structures and/or the input parameter set of the data mining algorithm 132 of the first user equipment 110A is modified through training in step S14.

Training of the data mining algorithms is performed in the following way.

In each of the peer nodes, there are an initial model and a private input data stored, which are used to modify the model according to the following procedure:
Procedure ModifyModell (m)
   *η* = 1/(*λ ·* M. *t*)
   if *y*〈*m. w, x*〉 < 1 then
   m. *w* ← (1 - *ηλ*)*m. w* + *ηyx*
   else
   *m. w* ← (1 - *ηλ*)*m. w m. t* ← *m. t* + 1
return m;

The basis of the above pseudo code is the *Pegasos* algorithm, which is suggested to train the SVM (Support Vector Machine). In the procedure, the following notation is used: the model to be modified is denoted by *m* and the training data is denoted by x. Training the SVM means that the internal parameters thereof are modified and in case of a linear SVM, the parameter is a vector *w*, the number of dimensions of which is equal to the dimension number of the data x to be classified. Additionally, as the process proceeds, the model also modifies a training factor *η* so that it decreases proportionally to the number of iterations. The SVM Pegasos model also includes a so called regularization parameter *λ* which defines the weight of the maximum marginal condition in the target function of the optimization task. In this context, the class label y of the data x to be specified may be either +1 or -1, depending on whether or not the data belongs to a specific class.

An essential part of the training process is that the parameters of the model are updated once new data are available, which allows a more precise recognition of the object. Another key issue is that the "knowledge" of the models generated in the peer nodes should be adapted for combining with each other. For example, when no further data are available, the nodes of the peer-to-peer network should be able to improve each other's model by forwarding their own models to the other nodes. In this respect one possible solution is that each of the peer nodes stores and modifies more than one model on the basis of its data, while it forwards some of those models to other connected nodes. To store more than one model has the advantage that in case of prediction, a more precise class label may be obtained by means of a voting scheme than in a single model case.
procedure ClassifyByVoting(x)
pRatio←0
for m in modelQueue do
if sign( 〈*m. w, x*〉 )≥0 then
pRatio←pRatio+1
return sign(pRatio/modelQueue.size()-0.5)

The above pseudo code carries out a voting classification by a simple majority voting, wherein the function sign() defines the sign (+ or -) of the argument, i.e. the label of the class.

It is also beneficial in the multi-model approach that from among the plurality of stored models, the leading best ones can be always selected and forwarded to the connected peers.

Another solution for improving the parameters of the models stored in the nodes is to combine a model with other models residing in the network without combining also the training data themselves. The efficiency of this kind of model combination depends on the network topology and the features of the models to be combined.

The above described algorithm was an exemplary embodiment of the embedded learning algorithm 132. In general, any data mining algorithm 132 trained by means of the well-known stochastic gradient algorithm can be embedded in the frame application 130.

In the following step S14, which forms an essential part of the invention, will be described in detail, wherein also the algorithm may change. To this end, it is supposed that in a system, *k* different learning algorithms are operating at a time instant *t*, wherein each of the algorithms trains a data model in the way as described above. Let these learning algorithms be denoted by *a₁(t),* ... *aₖ(t).* It is also necessary to evaluate the algorithms, which is carried out in the following way: each algorithm *aᵢ(t)* first makes an estimation for all the training patterns and then they calculate an error from the estimation and the actual value. Thus training and testing take place simultaneously in an online fashion. The running error of these estimation errors defines an approximate error of the algorithm. Let this approximate error be denoted by *err(aᵢ(t)).*

This online error *err(aᵢ(t))* forms the basis of the modification of the algorithms. A simple case is first introduced, where a plurality of algorithms are subject to a selection process, while the algorithms do not change. For example, beyond the above mentioned Pegasos algorithm, logistic regression, perceptron, decision tree, etc. or various parameterized versions thereof may be used, from among which the best one is to be selected for the particular frame application 130. In this scheme, each peer node uses the value of the error *err()* and carries out sampling at a likelihood proportional to said error *err()* to select the algorithm that will be forwarded in the next cycle.

In an even more complex scheme, the algorithms themselves are also modified. In such a scheme, after the above mentioned selection step, the following further steps are also taken:
a) small changes are made randomly either to the parameters of the algorithm or to the program code itself (using the method of genetic programming);
b) a number of promising algorithms are selected using the above method; and
c) by using a combination operator, a new algorithm is produced by combining the promising algorithms.

The combination operator depends on the applied representation. For example, in case of genetic programming, the program code is combined, while in a simpler case, where the algorithms are different only at numeric parameters, for example, an average of the different numeric parameters may be produced.

Due to the above scheme the most appropriate algorithm will be most widely spread or developed. Finally, it is noted that the larger the network is, the more efficient the above scheme is, because of the possibility of evaluating a higher number of variations. It is also noted that this scheme significantly increases the adaptivity of the system due to the fact that in response to the continuously produced training patterns, another algorithm might be the most appropriate at another time. In a preferred embodiment of the method according to the invention, the most appropriate training algorithm is automatically selected depending on the training patterns.

In the next step S16, at least a part of the modified input parameter set and/or the modified data structures of the data mining algorithm 132 of the first user equipment 110A or the information representing the changes therein are forwarded as training information from the first user equipment 110A by means of P2P propagation to a second user equipment 110B (i.e. the user equipment 110 with the mark 'B' in Figure 1) connected to the communication network 120. In the second user equipment 110B, training information is received by the frame application 130.

Finally, in step S18, at least one of the second user equipments 110B modifies the parameter set and/or the data structures (data models) of the respective embedded data mining algorithm 132 based on the training information (in the above described manner), for which the second user equipments may also involve their users in the local evaluation. Due to the training process (in which a user may be involved), the data mining algorithms 132 of the second user equipment 110B may be different from the respective data mining algorithm of the first user equipment 110A even at this time, and due to the shared training information, such differences may further increase, whereby the data mining algorithms 132 of the second user equipments 110B will be capable of carrying out even finer filtering processes and providing even more precise data mining results.

In a preferred embodiment of the method according to the invention, the data collecting components of the data mining algorithm 132 are verified before their uploading to the second network device 142. In course of the verification it is checked whether the algorithm complies with the parameters and other requirements described.

For example, it may be checked if the training information is properly propagated in the P2P network, which can be carried out at first by means of computer simulation, and then in a real test environment by using a group of test devices. The purpose of verification is to check whether the data mining algorithm under test is capable of collecting certain data and information from a large number (>1,000,000) of devices within one or two days in such a way that the devices can communicate only when they are being charged and simultaneously being connected to the network through wi-fi.

In another aspect of the invention, there is provided a user equipment adapted for utilizing in the above described method. The user equipment according to the invention is a processor-based device comprising a data mining frame application in the form of a code running on a device-specific platform, and a trainable data mining algorithm embedded in the frame application, said algorithm being produced in JavaScript programming language. The user equipment is also configured to communicate with other user equipments of the same type through a P2P communication network.

In a further aspect of the invention, there is provided a computer program product stored on a computer-readable medium and comprising instructions that when executed in a processor-based device as described above, which is connected to a peer-to-peer communication network, carries out the steps of:
- applying a data mining algorithm to process user data temporarily or permanently stored in the processor-based device,
- based on the result of the data mining processing, modifying the data structures and/or the input parameter sets of the data mining algorithm through training, and
- forwarding at least a part of the modified input parameter set and/or the modified data structures of the data mining algorithm as a training information to another processor-based device of the same type through the peer-to-peer communication network.

In yet another aspect of the invention, there is provided a computer program product stored on a computer-readable medium and comprising instructions that when executed in a processor-based device as described above, which is connected to a peer-to-peer communication network, carries out the steps of:
- from another processor-based device of the same type, receiving information relating to the training of the data mining algorithm of the associated processor-based device through the peer-to-peer communication network; and
- based on the training information, modifying the input parameter set and/or the data structures of the data mining algorithm of the associated processor-based device.

### Example

In the following, an example of how to use the trainable data mining algorithms according to the invention will be described. In the present example, the distributed data mining method is used for a plant identification application running on a smart phone. After taking a photo of a leaf of a tree, the photo of the leaf is shown to the plant identification application, and based on the photo, the application running on the smart phone presents, for example, five images of leaves belonging to different tree species, which images have been found similar to the photo by the data mining algorithm. By using the frame application, the leaf image which is most similar to the leaf shown in the photo is selected by the user. After this training process, in a next similar decision situation, the program will rank ahead those object-describing vectors that are associated with the image of leaf selected by the user.

To make differences between the various leaves, a number of heuristics, such as a color histogram of the leaf, the contour of the leaf, the nervure and the surface of the leaf, etc. may also be used. These heuristics may be modeled by various mathematic models, and it is difficult to predict how a given model is to be weighed in a decision procedure. During use, the various models (or data structures) and the parameter set thereof become increasingly finer, resulting in a training mechanism for the data mining algorithms.

The system may be trained by introducing either positive or negative patterns. In case of a plant identification application, the training process includes the following steps: the algorithm is uploaded to the second network device immediately after the training process has been completed using a first model (e.g. photos of 2500 leaves of 72 tree species). As long as the users take further and further photos of leaves (e.g. leaves in autumn colors, diseased leaves, etc.), the training data set, as well as the parameter set and model set derived therefrom are getting increasingly finer. The smart phones then share these parameter sets and model sets among each other directly within the P2P network in such a way, for example, that one of the phones forwards its own training information at night to 10 other mobile phones running the same application, which, in turn, forward this information one by one to further 10 mobile phones and so on. Thus, in a few steps, the information representing the most recent common knowledge will be propagated to all of the mobile phones concerned and the mobile phones can modify their own data mining algorithms respectively.

The solution according to the invention has the advantage of allowing the development of smart applications on the target platforms. The applications of P2P data mining algorithms in web containers provides a secure means of developing polymorphic algorithms. Those data that are currently enclosed in the devices or uploaded into big companies' cloud become available even without a cloud infrastructure, thereby allowing a cloud-less data mining. Due to the invention, applications like the *crowdsourcing-based* collective image recognition, statistical analysis based on large sets of sensible data, etc. may be produced.

## Claims

1. A distributed data mining method to be carried out in user equipments (110A, 110B) connected to a peer-to-peer communication network (120), each of said user equipments having a common programming platform, the method comprising the steps of:
a) in the user equipments (110A, 11 B), providing and storing a data mining frame application (130) in the form of a code running on a device-specific platform, and a trainable data mining algorithm (132) produced on a programming language common to all user equipments,
b) in a first user equipment (110A), running the data mining algorithm (132) to process user data temporarily or permanently stored in the first user equipment,
c) based on the result of the data mining processing, modifying the data structures and/or the input parameter set of the data mining algorithm (132) of the first user equipment (110A) through training,
d) at least a part of the modified input parameter set and/or the modified data structures of the data mining algorithm (132) of the first user equipment (110A) is forwarded as a training information from the first user equipment (110A) by means of peer-to-peer propagation to at least one second user equipment (110B) connected to the communication network (120), and
e) in at least one second user equipment (110B), modifying the input parameter set and/or the data structures of the data mining algorithm (132) running on the respective second user equipment (110B) by using the training information received from the first user equipment (110A).

2. The method according to claim 1, wherein step b) further comprising involving the user of the first user equipment (110A) in the processing of the user data.

3. The method according to claim 1 or 2, wherein step e) further comprising involving the user of the second user equipment (110B) in the modification of the data mining algorithm (132).

4. The method according to any one of claims 1 to 3, wherein the common programming platform is the JavaScript, and the user equipments (110A, 110B) have a web container adapted to run JavaScript code.

5. The method according to any one of claims 1 to 4, wherein the user equipments (110A, 110B) are selected from the group of: smart TV, smart phone, tablet, sensor, smart device of a car, smart household appliance.

6. A user equipment for using in the method according to any one of claims 1 to 5, wherein the user equipment is a processor-based device including a data mining frame application (130) in the form of a code running on a device-specific platform, and a trainable data mining algorithm (132) produced in JavaScript programming language and embedded in the frame application (130), and wherein the user equipment is adapted to communicate with other user equipments of the same type through a peer-to-peer communication network.

7. A computer program product stored on a computer-readable medium and comprising instructions that when executed in a processor-based user equipment according to claim 6, which is connected to a peer-to-peer communication network, carries out the steps of:
- applying a data mining algorithm to process user data temporarily or permanently stored in the user equipment,
- based on the result of the data mining processing, modifying the data structures and/or the input parameter sets of the data mining algorithm through training, and
- forwarding at least a part of the modified input parameter set and/or the modified data structures of the data mining algorithm as training information to another user equipment of the same type through the peer-to-peer communication network.

8. A computer program product stored on a computer-readable medium and comprising instructions that when executed in a processor-based user equipment according to claim 6, which is connected to a peer-to-peer communication network, carries out the steps of:
- from another user equipment of the same type, receiving training information relating to the training of the data mining algorithm of the associated user equipment through the peer-to-peer communication network; and
- based on said training information, modifying the input parameter set and/or the data structures of the data mining algorithm of the associated user equipment.
